# EUROPEAN PATENT SPECIFICATION

(11) **EP 1 435 304 B1**
(45) Date of publication and mention of the grant of the patent: **26.10.2005**
(21) Application number: 02425812.1
(22) Date of filing: 30.12.2002
(51) Int. Cl.: B60C 27/02

(54) **Coupling and tensioning device for snow chains**
Verbindungs- und Spanneinrichtung für Schneeketten
Tendeur et couplage pour des chaînes à neige

(43) Date of publication of application: 07.07.2004
(73) Proprietor: Thule S.p.A., 23847 Molteno (Lecco) (IT)
(72) Inventor: Airoldi, Romolo, 23900 Lecco (IT); Arrigoni Neri, Marco, 23811 Ballabio (Lecco) (IT)
(74) Representative: Petruzziello, Aldo

(56) References cited:
- EP-A- 1 132 221
- EP-B- 0 323 922
- US-A- 1 980 362

## Description

The present invention relates to a coupling and tensioning device for snow chains or anti-skid devices designed to be mounted on the tyres of vehicles. Said coupling and tensioning device is particularly suitable to be applied to lengths of emergency snow chains, commonly called strap-on chains and generally used in wheels of large vehicles, such as trucks and the like.

When a vehicle is on a road surface covered by snow, sleet or ice, its tyres do not have a good grip and dangerous skidding and sliding can occur. To avoid said drawbacks, it is customary to use anti-skid devices, commonly called snow chains.

Snow chains, normally mounted on the driving wheels of the vehicle, by biting into the snow and/or ice deposited on the road surface, increase the traction on the tread, permitting good holding by the tyres of the vehicle.

In cases of emergency and especially for large tyres, such as those of trucks, emergency snow chains called strap-on chains are widely marketed. A strap-on chain generally comprises three lengths of chain disposed parallel, the ends of which are connected to two flanges, so that the lengths of chain abut on the tread of the tyre and the flanges abut respectively on the inside and outside walls of the tyre.

A terminal length of chain is connected to the flange disposed on the inside wall of the tyre and is passed through one of the holes in the wheel rim to hook on to a coupling and tensioning device connected to the flange disposed on the outside wall of the tyre.

The coupling and tensioning devices according to the prior art generally comprise a tie rod, which is hooked at one end and threaded at the other. The threaded end of the tie rod is connected by means of a nut to a plate in turn connected to the outer flange. In this manner the user hooks a link of the terminal length of chain to the hook of the tie rod and then, by means of a special tool such as a spanner, tightens the nut to tension the strap-on chain.

It is evident that the both the mounting and removal operations for strap-on chains are complex, laborious, require the possession of special tools and do not ensure perfect tensioning of the strap-on chain.

Furthermore, it should be noted that for reasons of safety the connecting plate between the tie rod and the outer flange is made of metal and since it abuts against the edge of the wheel rim, can cause damage or deterioration thereof.

The object of the present invention is to overcome the drawbacks of the prior art, providing a coupling and tensioning device for snow chains that is safe, efficient and such as to allow perfect tensioning of the snow chains, avoiding any accidental slackening.

Another object of the present invention is to provide a coupling and tensioning device for snow chains that is practical and easy to use for the user and at the same time allows extremely rapid mounting of the snow chains.

Another object of the present invention is to provide a coupling and tensioning device for snow chains that is able to avoid damage to and deterioration of the wheel rim of the vehicle whereon it is mounted.

Yet another object of the present invention is to provide a coupling and tensioning device for snow chains that is cheap and simple to make.

A coupling and tensioning device according to the preamble of claim 1 is disclosed in EP-B-0323922

These objects are achieved in accordance with the invention with the characteristics listed in appended independent claim 1.

Advantageous embodiments of the invention are apparent from the dependent claims.

The coupling and tensioning device according to the invention is suitable to be applied to chains comprising an outer flange able to be placed on the outside wall of the tyre, an inner flange able to be positioned on the inside wall of the tyre, said flanges being joined by variously composed elements creating the traction on the tread.

The coupling and tensioning device comprises first coupling means designed to couple with the outer flange and second coupling means designed to couple with a terminal portion connected to the inner flange.

The peculiar characteristic of the invention is represented by the fact that the coupling and tensioning device comprises:
- a main body, to which the first coupling means are connected,
- a non-return block, slidably mounted in the main body and able to receive second coupling means to allow a first mild tensioning of the snow chains by pulling manually on the second coupling means, and
- manually operated lever means, mounted in the main body to cause translation of the non-return block and allow a second tensioning of the snow chains.

From this brief description the advantages of the coupling and tensioning device for snow chains according to the invention are evident.

In fact, mounting and operation of said device are extremely simple and rapid, without any need to use special tools.

Furthermore, the possibility of performing a double tensioning by pulling on the second tensioning means and by operating the operating lever allows an efficient and secure tensioning of the snow chains.

Furthermore, the body of the coupling and tensioning device can be formed by means of plastic shells, avoiding damaging the wheel rim.

Further characteristics of the invention will be made more apparent by the detailed description that follows, referring to a purely exemplary and therefore non-limiting embodiment thereof, illustrated in the appended drawings, in which:
Figure 1 is a perspective view illustrating a coupling and tensioning device for snow chains according to the invention;
Figure 2 is a perspective exploded view illustrating some elements of the coupling and tensioning device of Figure 1, and a strap-on type snow chain, shown broken off and on a reduced scale;
Figure 3 is a perspective view illustrating a first stage of application of the coupling and tensioning device of Figure 1 to a strap-on chain disposed on a vehicle wheel; and
Figure 4 is a perspective view, illustrating the coupling and tensioning device of Figure 3 in the ready state for final tensioning of the strap-on chain.

The coupling and tensioning device according to the invention, designated as a whole with reference numeral 100, will be described with the aid of the figures.

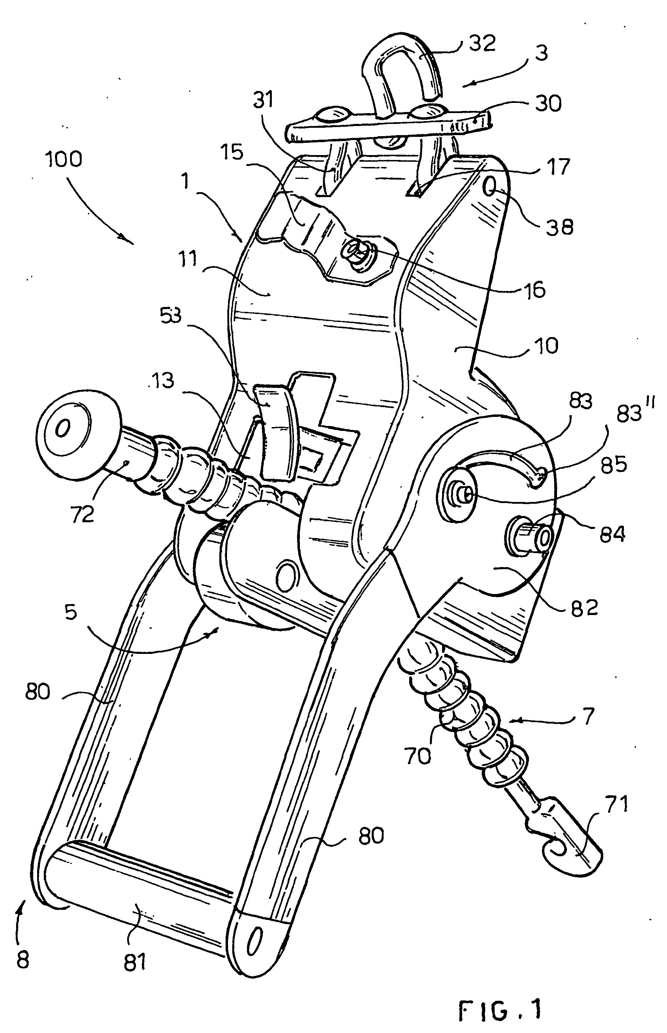

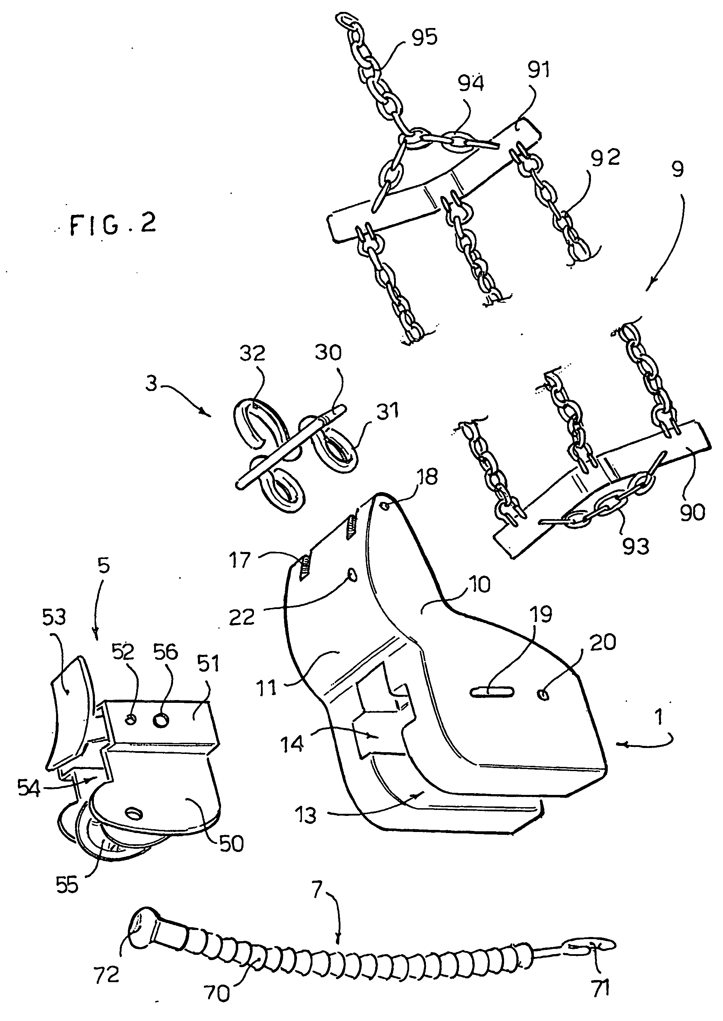

With particular reference for now to Figures 1 and 2, the coupling and tensioning device 100 comprises a main body 1, fist coupling means 3 mounted at one end of the body 1, an anti-return block 5 slidably mounted in the body 1, second coupling means 7 mounted inside the anti-return block 5 and lever operating means 8 connected to the body 1 to move the anti-return block 5.

The body 1 is a substantially L-shaped box-type body, with a top part and a larger bottom part. With reference to the figures, the body 1 has two side walls (only one visible in the figures), a front wall 11 destined to face outwards and a rear wall (not visible in the figure) destined to face towards the vehicle wheel.

A slot 13, open towards the outside at the bottom, is formed in the bottom part of the body 1. The slot 13 communicates with a widened central seat 14 rectangular in section.

A transverse, rectilinear through slot 19 which runs from one side wall 10 to the other side wall of the body 1 passing through the central seat 14, is provided in the bottom part of the body 1.

A transverse through hole 20, which runs from a side wall 10 to the other side wall of the body 1 passing through the central seat 14, is provided aligned to the transverse slot 19.

A threaded hole 22 to receive a bolt 16 for mounting a coupling plate 15 is provided on the front surface 11 of the top part of the body 1. The coupling plate 15 is bent substantially in a Z shape, so that it protrudes forward from the front surface 11.

Two slots 17 parallel to each other are formed at the top end of the body 1. The slots 17 are passed through by a transverse through hole 18, which pass through the body 1 from one side wall to the other.

The first coupling means 3 comprise a rectangular plate 30, to which two "ring rivets" 31 are fixed. A hook 32, which protrudes in the opposite direction with respect to the ring rivets 31, is hinged in a central position of the plate 30. Hook 32 can rotate around its axis, which is at right angle to the plane of the plate 30.

The two ring rivets 31 are so disposed to be able to engage in the two slots 17 of the main body. Then, a pin 38, which passes inside the ring, rivets 31 so as to constrain the first coupling means 3 is inserted in the transverse through hole 18 in the front part of the body 1. It should be noted that the ring rivets 31 can turn around the axis of the pin 38 and that the hook 32 can turn around an axis substantially at right angles to the axis of the pin 38.

The anti-return block 5 is of the type commonly known in the technical field of snow chains. An example of an anti-return block is described in patent application EP 1.132.221 in the name of the same applicant.

The anti-return block 5 comprises an outer shell 50 having a parallelepiped portion 51 suitable to be inserted in the central seat 14 of the body 1, so as to be to slide therein.

A pawl 53 having one end shaped as a button that can be operated with a finger by the user is hinged in 52 in the anti-return block 5. The pawl 53 is urged by a spring (not shown in the figures) disposed inside the shell 50 so that the other end (not visible in the figures) of the pawl 53 is situated in a through slot 54 defined in the shell 50 and delimited by a support 55 having a flared entry profile. In any case, when the anti-return block 5 is inserted into the body 1, the button-shaped end of the pawl 53 is accessible from the outside to be operated by the user's finger.

A transverse through hole 56 is provided in the parallelepiped part 51 of the anti-return block 5.

The second coupling means 7 comprise a cable 70 for anti-return devices of the type commonly known in the technical field of snow chains. An example of a cable for anti-return devices is described in patent application EP 1.132.221 in the name of the same applicant.

The cable 70 consists of a plurality of rounded stop elements disposed one behind the other and spaced out at a suitable pitch. In this manner the cable 70 can be inserted in the slot 54 of the anti-return block 5 and slide in the anti-return block so that the end of the pawl 53 of the anti-return block abuts against a stop element of the cable 70 stopping sliding of the cable in one direction. In this manner the pawl 53 acts as a jack for the anti-return block 5 and can be released by manual operation. Sliding of the cable 70 in the anti-return block is favoured by the flared profile of the entry support 55.

A hook 71 is provided at one end of the cable 70, whilst at the other end of the cable 70 a mushroom knob 72 is provided such as to provide a handgrip for pulling on the cable 70.

The lever operating means 8 comprise two levers 80 parallel to each other, connected at their ends by means of a transverse handle 81 suitable to be gripped by the user.

At the other end, each lever 80 has a discoid part 82. An arched cam-shaped slot 83 and a pivot hole are provided in the discoid part 82 of each lever 80. The cam-shaped slot 83 has two ends: a first end distal to the pivot hole and a second end proximal to the pivot hole.

In this manner the discoid parts 82 of the two levers 80 are disposed in abutment against the side surfaces 10 in the bottom part of the body 1. Then, a first pivot 84 is inserted in the holes in the discoid parts of the levers 80 and in the transverse hole 20 of the body 1, so as to pivot the lever operating means 8 to the body 1.

A second pivot 85 is passed through the cam-shaped slots 83 of the levers 80 through the rectilinear slot 19 of the body 1 and through the transverse through hole 56 of the anti-return block 5. In this manner manual operation of the lever means 8 causes a rotation of the levers 80 around the pivot axis 84.

In Figure 1, the second pivot 85 is shown abutting on the distal end of the cam-shaped slot 83. When the operating lever 80 is rotated around the first pivot 84, the second pivot 85 follows the cam run defined by the cam-shaped slot 83 and moves in the proximal end of the cam-shaped slot 83. As a result the second pivot 85 is moved in translation inside the rectilinear slot 19 of the body 1. Consequently the anti-return block 5, which is constrained to the pivot 85, also performs a translation inside the slot 13 of the body 1.

In accordance with the above, by operating the lever means 8 the anti-return block 5 can perform a translation inside the body 1 passing from a retracted resting position to a forward tensioning position.

The stroke of the anti-return block 5 is determined by the shape of the cam-shaped slot 83, the ends of which 83', 83" form stops for the pivot 85.

The coupling and tensioning device 100 is suitable to be applied to a snow chain 9 of the strap-on type, like that shown in Figure 2. The strap-on chain 9 comprises a front or outer flange 90 and a rear or inner flange 91 to which three portions of chains 92 disposed parallel to each other are applied.

A front portion of chain 93 is connected to the outer flange 90 and a rear terminal portion of chain 95 is connected to the inner flange 91 by means of an intermediate portion of chain 94.

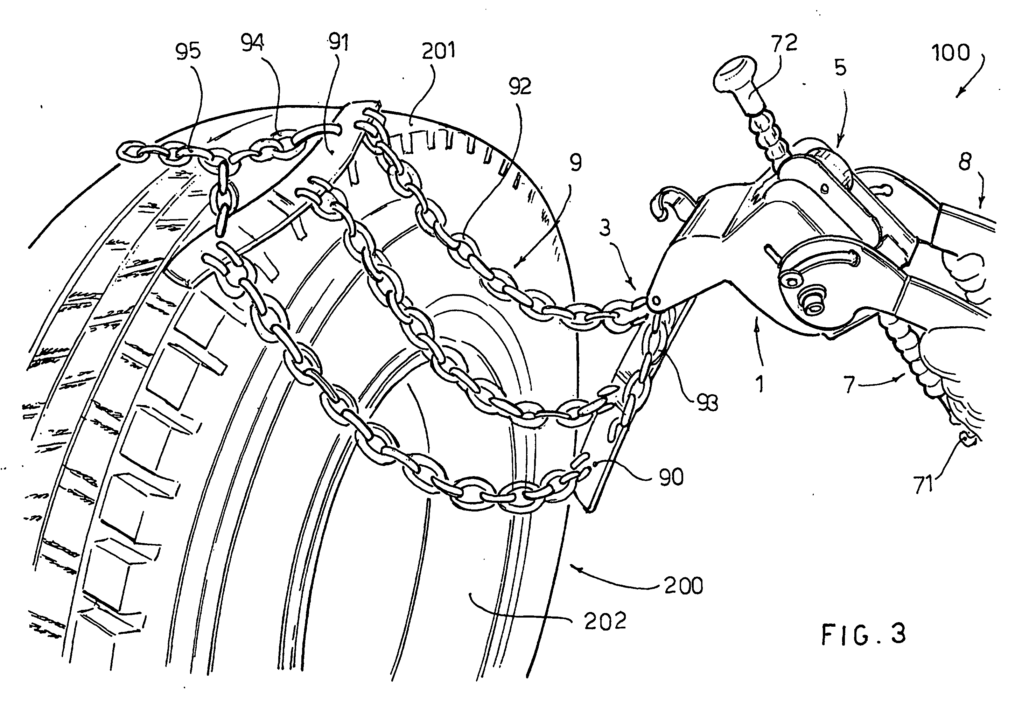

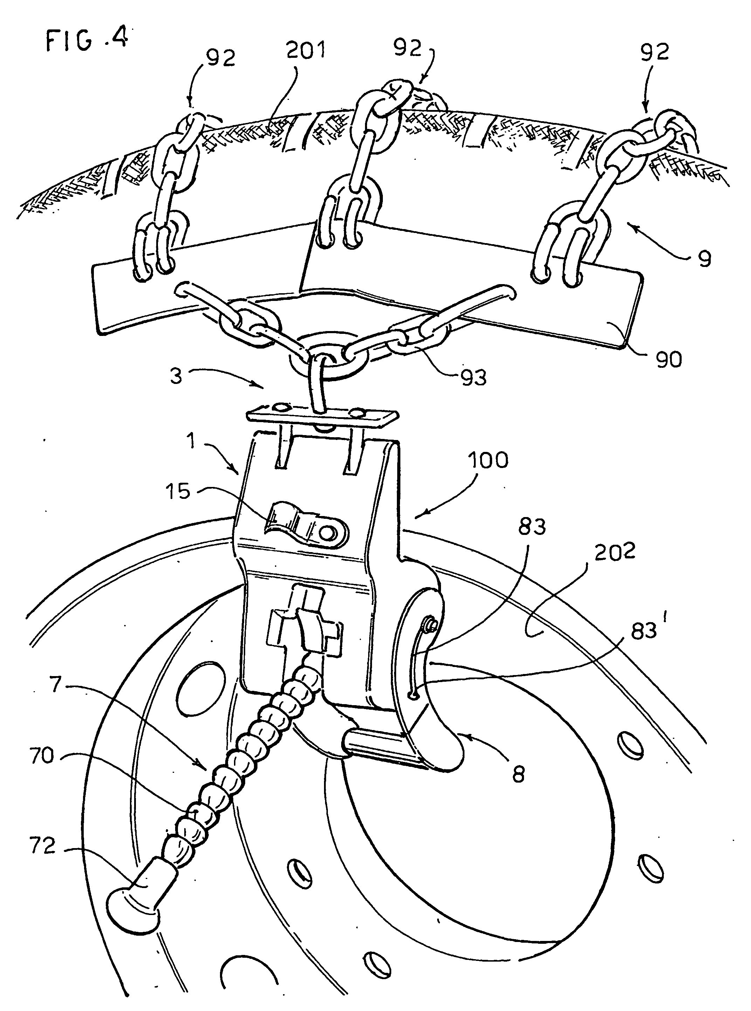

Mounting of the snow chains 9 with the aid of the coupling and tensioning device 100 according to the invention is described hereunder with reference to Figures 3 and 4.

In Figure 3 a large wheel 200, such as a wheel of a truck or the like, is partially shown. The wheel 200 has a very wide tyre 201 mounted on a rim 202.

The hook 32 of the first coupling means 3 of the coupling and tensioning device 100 is permanently coupled to a link of the front portion of chain 93. The outer flange 90 of the chain 9 is disposed on the outside wall of the tyre 201. The three portions of chain 92 are disposed on the tread of the tyre 201 and the inner flange 91 is disposed on the inside wall of the tyre.

In this situation, the coupling and tensioning device 100 abuts against the outer part of the rim 202 and the outside wall of the tyre 201. The terminal portion of chain 95 is passed through one of the holes in the rim 202 to be brought into the outward facing part of the wheel, so that the hook 71 of the second coupling means 7 hooks into a link of the terminal portion of chain 95.

At this point the user pulls on the cable 70 by means of the knob 72 so as to perform a first mild tensioning of the terminal portion 95 and thus of the snow chains 9. It should be noted that the cable 70, passing through the anti-return block 5, can slide only in the tensioning direction and not in the slackening direction, thus avoiding any unwanted slackening of the chains 9.

At this point the user, gripping the handle 81, operates the lever operating means 8 by pulling the handle towards himself, that is to say by moving it away from the rim of the wheel. In this manner the discoid part 82 of the levers 80 turns around the first pivot 84 and the cam-shaped slot 83 pushes the second pivot 85, causing an outward translation of the anti-return block 5 which also pulls with it the cable 70 and thus allows a further tensioning of the terminal portion of chain 95 and of the snow chains 9. The lever 80 is prevented from coming back by the hooked end 83' of the cam-shaped slot 83, in which the pivot 85 comes to rest.

Lastly, the user hooks the cable 7 into the coupling plate 15, so that the cable 7 does not protrude outward from the wheel 200 with the risk of causing unwanted damage.

To remove the snow chains, the user simply operates the operating lever 8 pushing it towards the rim of the wheel, thus causing an inward translation of the anti-return block 5 and a first slackening of the chains 9. Afterwards, the user pushes with a finger on the button of the pawl 53 of the anti-return block 5, allowing sliding of the cable 70 in the direction of slackening of the chains.

At this point the user unhooks the chains from the coupling means 7 of the coupling and tensioning device 100 and removes both the chains and the coupling and tensioning device 100 from the wheel.

Clearly, by changing the shape of the cam-shaped slot 83 with respect to that shown in the drawings, the operating movements of the lever means 8 can be inverted with respect to what is described above, that is to say the handle 81 can be pushed towards the wheel rim for tightening the chains and the handle 81 can be pulled away from the wheel rim for slackening the chains.

Clearly, a plurality of strap-on chains 9 with the respective coupling and tensioning devices 100 can be mounted on a wheel 200. Three strap-on chains 9 disposed at an equal distance from each other are preferably mounted on a truck wheel.

It should be noted that the hook 32 of the first coupling means 3 is hinged rotatably in the plate 30 to allow reversibility of the snow chains 9. That is to say, when the surface of the chains 9 that abuts on the ice or on the asphalt deteriorates, the chains can be turned of 180° so that the deteriorated part abuts on the tyre tread, without the need to detach the hook 32 of the coupling and tensioning device from the snow chains.

Clearly the body 1 of the coupling and tensioning device can be made of plastic to avoid deterioration of the wheel rim. The body 1 can be made in a single piece by injection moulding or it can be made in two shell halves that can be assembled together.

Numerous changes and modifications of detail within the reach of a person skilled in the art can be made to the present embodiment of the invention, without departing from the scope of the invention as set forth in the appended claims.

## Claims

1. A coupling and tensioning device (100) for snow chains (9) comprising an outer flange (90) suitable to be placed on the outside wall of a tyre (201), an inner flange (91) suitable to be positioned on the inside wall of the tyre (201), said flanges being joined by variously composed elements (92) creating the traction on the tread, said coupling and tensioning device (100) comprising first coupling means (3) designed to couple to said outer flange (90) and second coupling means (7) designed to couple to a chain terminal portion (95) connected to said inner flange (91),
a main body (1) is bearing said first coupling means (3), the device (100) is further **characterised in that**
an anti-return block (5) is slidably mounted in said main body (1) and able to receive said second coupling means (7) to allow a first mild tensioning of the snow chains (9) by manual pulling of said second coupling means (7), and
- manually operated lever means (8) mounted in said main body (1) to cause a translation of said anti-return block (5) and to allow a further tensioning of said snow chains (9).

2. A coupling and tensioning device (100) according to claim 1, **characterised in that** said second coupling means (7) comprise a cable (70), consisting of a plurality of stop elements, able to slide in said anti-return block (5) in the tensioning direction of the snow chains (9), said cable (70) having at one end a hook (71) able to engage in a link of said terminal portion (95) of the snow chains.

3. A coupling and tensioning device (100) according to claim 2, **characterised in that** a knob (72) is provided at the end of said cable (70) opposite to the hook (71) to facilitate manual pulling on the cable by the user.

4. A coupling and tensioning device (100) according to claim 2 or 3, **characterised in that** a coupling plate (15), able to couple said cable (70) to prevent outward protrusion thereof, is mounted on the front surface of said main body (1).

5. A coupling and tensioning device (100) according to any one of the preceding claims, **characterised in that** said manually operated lever means (8) comprise at least one lever (80) pivoted in said main body (1) by means of a first pivot (84) and having a cam-shaped slot (83) wherein a second pivot (85) constrained to said anti-return block (5) engages.

6. A coupling and tensioning device (100) according to claim 5, **characterised in that** said main body (1) comprises a seat (14) wherein said anti-return block (5) is slidably mounted, a transverse hole (20) wherein said first pivot (84) of said lever (80) of the lever operating means (8) engages and a rectilinear transverse slot (19) wherein said second pivot (85) of said lever (80) of the lever operating means (8) engages.

7. A coupling and tensioning device (100) according to claim 5 or 6, **characterised in that** said anti-return block (5) comprises a transverse through hole (56) wherein said second pivot (85) engaged in said cam slot (83) of said lever (80) of the lever operating means (8) engages.

8. A coupling and tensioning device (100) according to any one of the preceding claims, **characterised in that** said lever operating means (8) comprise two levers (80) pivoted in the side walls of said main body (1) and connected at their free ends by a transverse handle (81) which can be gripped by the user.

9. A coupling and tensioning device (100) according to any one of the preceding claims, **characterised in that** said anti-return block (5) has a pawl (53) urged by a spring and provided at one end with an release button protruding forward from said body (1) to be able to be operated by the user for slackening of the snow chains.

10. A coupling and tensioning device (100) according to any one of the preceding claims, **characterised in that** said first coupling means (3) comprise a hook (32) rotatably mounted with respect to said main body (1) so as to allow rotation of said snow chains (9).

## Patentansprüche

1. Eine Kupplungs- und Spannungsvorrichtung (100) für Schneeketten (9), die einen äußeren Flansch (90) umfasst, der geeignet ist, an der Außenseite eines Reifens (201) angeordnet zu werden, einen inneren Flansch (91), der geeignet ist, an der Innenseite des Reifens (201) angeordnet zu werden, wobei die genannten Flansche durch unterschiedlich zusammengesetzte Elemente (92) verbunden werden, die die Bodenhaftung an der Lauffläche erzeugen, und die genannte Kupplungs- und Spannungsvorrichtung (100) erste Kupplungselemente (3) umfasst, die dazu bestimmt sind, sich mit dem genannten äußeren Flansch (90) zu verkuppeln, und zweite Kupplungselemente (7), die dazu bestimmt sind, sich mit einem Kettenendabschnitt (95) zu verkuppeln, der mit dem genannten inneren Flansch (91) verbunden ist, wobei ein Hauptkörper (1) die genannten ersten Kupplungselemente (3) trägt, die Vorrichtung (100) darüber hinaus **dadurch gekennzeichnet ist, dass** ein Rücklaufschutz-Block (5) gleitbar in dem genannten Hauptkörper (1) montiert und in der Lage ist, die genannten zweiten Kupplungselemente (7) aufzunehmen, um eine erste leichte Spannung der Schneeketten (9) durch Ziehen der genannten zweiten Kupplungselemente (7) von Hand zu gestatten, und
- von Hand bediente Hebelelemente (8), die in dem genannten Hauptkörper (1) montiert sind, um eine Translation des genannten Rücklaufschutz-Blocks (5) zu verursachen und eine weitere Spannung der genannten Schneeketten (9) zu gestatten.

2. Eine Kupplungs- und Spannungsvorrichtung (100) gemäß Anspruch 1, **dadurch gekennzeichnet, dass** die genannten zweiten Kupplungselemente (7) ein aus einer Vielzahl von Sperrelementen bestehendes Kabel (70) umfassen, das in der Lage ist, in dem genannten Rücklaufschutz-Block (5) in der Spannungsrichtung der Schneeketten (9) zu gleiten, wobei das genannte Kabel (70) an einem Ende einen Haken (71) aufweist, der geeignet ist, in ein Glied des genannten Endabschnitts (95) der Schneeketten einzurasten.

3. Eine Kupplungs- und Spannungsvorrichtung (100) gemäß Anspruch 2, **dadurch gekennzeichnet, dass** am Ende des genannten Kabels (70) gegenüber dem Haken (71) ein Drehknopf (72) vorgesehen ist, um das manuelle Ziehen des Kabels durch den Verwender zu vereinfachen.

4. Eine Kupplungs- und Spannungsvorrichtung (100) gemäß Anspruch 2 oder 3, **dadurch gekennzeichnet, dass** eine Kupplungsplatte (15), die in der Lage ist, das genannte Kabel (70) einzuhaken, um zu vermeiden, dass es nach außen vorsteht, an der Vorderseite des genannten Hauptkörpers (1) montiert ist.

5. Eine Kupplungs- und Spannungsvorrichtung (100) gemäß einem beliebigen der vorausgegangenen Ansprüche, **dadurch gekennzeichnet, dass** die genannten, von Hand betätigten Hebelelemente (8) mindestens einen Hebel (80) umfassen, der in dem genannten Hauptkörper (1) durch einen ersten Zapfen (84) angelenkt ist und der einen nockenförmigen Schlitz (83) aufweist, in den ein zweiter Zapfen (85), der mit dem genannten Rücklaufschutz-Block (5) verbunden ist, einrastet.

6. Eine Kupplungs- und Spannungsvorrichtung (100) gemäß Anspruch 5, **dadurch gekennzeichnet, dass** der genannte Hauptkörper (1) einen Sitz (14) umfasst, in dem der genannte Rücklaufschutz-Block (5) gleitbar montiert ist, eine Queröffnung (20), in die der genannte erste Zapfen (84) des genannten Hebels (80) der Hebelbetätigungselemente (8) einrastet, und einen geradlinigen Querschlitz (19), in den der genannte zweite Zapfen (85) des genannten Hebels (80) der Hebelbetätigungselemente (8) einrastet.

7. Eine Kupplungs- und Spannungsvorrichtung (100) gemäß Anspruch 5 oder 6, **dadurch gekennzeichnet, dass** der genannte Rücklaufschutz-Block (5) eine durchgehende Queröffnung (56) umfasst, in die der genannte zweite Zapfen (85) in den genannten Nockenschlitz (83) des genannten Hebels (80) der Hebelbetätigungselemente (8) einrastet.

8. Eine Kupplungs- und Spannungsvorrichtung (100) gemäß einem beliebigen der vorausgegangenen Ansprüche, **dadurch gekennzeichnet, dass** die genannten Hebelbetätigungselemente (8) zwei Hebel (80) umfassen, die an den Seitenwänden des genannten Hauptkörpers (1) angelenkt und an ihren freien Enden durch einen Quergriff (81) verbunden sind, der vom Verwender erfasst werden kann.

9. Eine Kupplungs- und Spannungsvorrichtung (100) gemäß einem beliebigen der vorausgegangenen Ansprüche, **dadurch gekennzeichnet, dass** der genannte Rücklaufschutz-Block (5) eine Sperrklinke (53) aufweist, die durch eine Feder gespannt wird und an einem Ende mit einem Auslösungsknopf ausgestattet ist, welcher vorne von dem genannten Körper (1) vorsteht, um vom Verwender zur Lockerung der Schneeketten benutzt werden zu können.

10. Eine Kupplungs- und Spannungsvorrichtung (100) gemäß einem beliebigen der vorausgegangenen Ansprüche, **dadurch gekennzeichnet, dass** die genannten ersten Kupplungselemente (3) einen Haken (32) umfassen, der drehbar im Verhältnis zu dem genannten Hauptkörper (1) montiert ist, um die Drehung der genannten Schneeketten (9) zu gestatten.

## Revendications

1. Dispositif de mise en tension et de raccordement (100) pour des chaînes à neige (9) comprenant une bride extérieure (90) pouvant être placée sur la paroi extérieure d'un pneumatique (201), une bride intérieure (91) pouvant être placée sur la paroi intérieure du pneumatique (201), lesdites brides étant reliées par des éléments de différentes compositions (92) créant la traction sur la chape de roulement, ledit dispositif de mise en tension et de raccordement (100) comprenant des premiers dispositifs de raccordement (3) conçus pour raccorder ladite bride extérieure (90) et des deuxièmes dispositifs de raccordement (7) conçus pour se raccorder à une portion terminale de une chaîne (95) reliés à ladite bride intérieure (91), un corps principal (1) supporte lesdits premiers dispositifs de raccordement (3), le dispositif (100) est **caractérisé** également en ce qu'un block anti-retour (5) est monté de façon coulissante dans ledit corps principal (1) et est en mesure d'accueillir lesdits deuxièmes dispositifs de raccordement (7) pour permettre une première mise en tension légère des chaînes à neige (9) par le tirage manuel desdits deuxièmes dispositifs de raccordement (7), et
- des dispositifs-levier actionnés manuellement (8) montés dans ledit corps principal (1) pour provoquer une translation dudit block anti-retour (5) et pour permettre de mettre davantage en tension lesdites chaînes à neige (9).

2. Dispositif de mise en tension et de raccordement (100) selon la revendication 1, **caractérisé en ce que** lesdits deuxièmes dispositifs de raccordement (7) comprennent un câble (70), composé d'une pluralité d'éléments d'arrêt, en mesure de coulisser dans ledit block anti-retour (5) dans la direction de mise en tension des chaînes à neige (9), ledit câble (70) présentant à une extrémité un crochet (71) en mesure de s'engager dans un raccord de ladite portion terminale (95) des chaînes à neige.

3. Dispositif de mise en tension et de raccordement (100) selon la revendication 2, **caractérisé en ce qu'**un bouton (72) est pourvu à l'extrémité dudit câble (70) à l'opposé du crochet (71) pour faciliter le tirage manuel sur le câble de la part de l'utilisateur.

4. Dispositif de mise en tension et de raccordement (100) selon la revendication 2 ou 3, **caractérisé en ce qu'**une plaque de raccordement (15), en mesure de raccorder ledit câble (70) pour éviter toute sortie en saillie vers l'extérieur de celui-ci, est montée sur la surface frontale dudit corps principal (1).

5. Dispositif de mise en tension et de raccordement (100) selon une revendication quelconque parmi les revendications susmentionnées, **caractérisé en ce que** lesdits dispositifs-levier actionnés manuellement (8) comprennent au moins un levier (80) monté sur pivot dans ledit corps principal (1) au moyen d'un premier pivot (84) et présentant une fente en forme de came (83) où un deuxième pivot (85) forcé vers ledit block anti-retour (5) s'engage.

6. Dispositif de mise en tension et de raccordement (100) selon la revendication 5, **caractérisé en ce que** ledit corps principal (1) comprend un logement (14) où ledit block anti-retour (5) est monté de façon coulissante, un orifice transversal (20) où ledit premier pivot (84) dudit levier (80) des dispositifs-levier opérationnels (8) s'engage et une fente transversale rectiligne (19) où s'engage ledit deuxième pivot (85) dudit levier (80) des dispositifs-levier opérationnels (8).

7. Dispositif de mise en tension et de raccordement (100) selon la revendication 5 ou 6, **caractérisé en ce que** ledit block anti-retour (5) comprend un orifice de passage transversal (56) où ledit deuxième pivot (85) introduit dans ladite fente à came (83) dudit levier (80) des dispositifs-levier opérationnels (8) s'engage.

8. Dispositif de mise en tension et de raccordement (100) selon une revendication quelconque parmi les revendications susmentionnées, **caractérisé en ce que** lesdits dispositifs-levier opérationnels (8) comprennent deux leviers (80) montés sur pivot dans les parois latérales dudit corps principal (1) et reliés à leurs extrémités libres par une poignée transversale (81) qui peut être saisie par l'utilisateur.

9. Dispositif de mise en tension et de raccordement (100) selon une revendication quelconque parmi les revendications susmentionnées, **caractérisé en ce que** ledit block anti-retour (5) présente un encliquetage (53) poussé par un ressort et pourvu à une extrémité d'un bouton de relâchement sortant en saillie dudit corps (1) de façon à être utilisé par l'utilisateur pour ralentir les chaînes à neige.

10. Dispositif de mise en tension et de raccordement (100) selon une revendication quelconque parmi les revendications susmentionnées, **caractérisé en ce que** lesdits premiers dispositifs de raccordement (3) comprennent un crochet (32) monté de façon rotative par rapport audit corps principal (1) de sorte qu'il permet la rotation desdites chaînes à neige (9).
